(19) **Europäisches Patentamt / European Patent Office / Office européen des brevets**

(11) **EP 2 660 915 A1**

(12) **EUROPEAN PATENT APPLICATION**
published in accordance with Art. 153(4) EPC

(43) Date of publication:
06.11.2013 Bulletin 2013/45

(51) Int Cl.:
*H01M 8/06* (2006.01)   *B01D 53/14* (2006.01)
*B01J 20/02* (2006.01)   *B01J 20/18* (2006.01)
*C01B 3/38* (2006.01)   *C10G 25/05* (2006.01)
*C10L 3/10* (2006.01)

(21) Application number: 11853710.9

(22) Date of filing: 21.12.2011

(86) International application number:
PCT/JP2011/079702

(87) International publication number:
WO 2012/090832 (05.07.2012 Gazette 2012/27)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 28.12.2010 JP 2010293668

(71) Applicant: JX Nippon Oil & Energy Corporation
Chiyoda-ku
Tokyo 100-8162 (JP)

(72) Inventors:
• SUGANO Hideaki
Tokyo 100-8162 (JP)
• ISHIZUKI Kimika
Tokyo 100-8162 (JP)

(74) Representative: Grünecker, Kinkeldey,
Stockmair & Schwanhäusser
Leopoldstrasse 4
80802 München (DE)

(54) **DESULFURIZATION SYSTEM FOR FUEL CELL, HYDROGEN PRODUCTION SYSTEM FOR FUEL CELL, FUEL CELL SYSTEM, DESULFURIZATION METHOD FOR HYDROCARBON FUEL, AND METHOD FOR PRODUCING HYDROGEN**

(57) A desulfurization system for a fuel cell of the invention includes a fuel supply unit that supplies a hydrocarbon fuel, which contains sulfur compounds, contains oxygen at a volume concentration of 1 ppm to 4%, and has a Wobbe index of 12 kWh/m$^3$ to 16 kWh/m$^3$, at a latter stage portion; and a desulfurization unit that includes a desulfurization catalyst that desulfurizes the hydrocarbon fuel, and the desulfurization catalyst includes an Ag-loaded zeolite and/or a Cu-loaded zeolite.

Fig.1

## Description

### Technical Field

The present invention relates to a desulfurization system for a fuel cell, a hydrogen production system for a fuel cell, a fuel cell system, a desulfurization method for a hydrocarbon fuel, and a method for producing hydrogen.

### Background Art

Generally, gas mainly including hydrogen is used as a fuel gas for a fuel cell, and hydrocarbons, such as natural gas, LPG, city gas, naphtha or kerosene, are used as raw materials thereof. Hydrogen obtained by treating the above raw materials including hydrocarbons together with steam on a catalyst at a high temperature, partially oxidizing the raw material using oxygen-containing gas, or causing a autothermal reforming reaction in a system in which steam and oxygen-containing gas coexist is used as fuel hydrogen for a fuel cell.

A raw material including the above hydrocarbons includes sulfur compounds as impurities or additives. As the catalyst used in raw material reforming, which continues until the fuel hydrogen for a fuel cell is produced, and, furthermore, in an anode, a noble metal, copper or the like in a reduced state is frequently used. In this state, there is a problem in that sulfur acts as a catalytic poison, degrades the catalytic activity of a hydrogen production process or a cell, and decreases the efficiency. Therefore, ordinarily, the raw material is desulfurized using a metal-loaded zeolite or the like (for example, refer to the following Patent Literature 1).

### Citation List

### Patent Literature

[Patent Literature 1] Japanese Unexamined Patent Application Publication No. 10-237473

## Summary of Invention

### Technical Problem

There is a demand for the expansion of available fuels in order to distribute fuel cells. For example, the use of biomass-derived fuels is expected from the viewpoint of resource limitation or environmental consideration. An attempt has been made to use biogas containing oxygen gas and the like as a part of city gas, which is used for hot-water supply, cooking, heating and the like, in order to neutralize carbon, but biogas has not yet been put into practical use for a fuel cell.

Therefore, an object of the invention is to provide a desulfurization system for a fuel cell, which can supply a hydrocarbon fuel including oxygen and only a small amount of sulfur compounds, a hydrogen production system for a fuel cell, a fuel cell system, a desulfurization method for a hydrocarbon fuel, and a method for producing hydrogen.

### Solution to Problem

In order to solve the above problem, according to an aspect of the invention, there is provided a desulfurization system for a fuel cell including a fuel supply unit that supplies a hydrocarbon fuel, which contains sulfur compounds, contains oxygen at a volume concentration of 1 ppm to 4%, and has a Wobbe index of 12 kWh/m$^3$ to 16 kWh/m$^3$, at a latter stage portion; and a desulfurization unit that includes a desulfurization catalyst that desulfurizes the hydrocarbon fuel, in which the desulfurization catalyst includes an Ag-loaded zeolite and/or a Cu-loaded zeolite.

Meanwhile, in the present specification, the volume concentration of oxygen refers to a value measured according to JIS K 2301 "Fuel Gases And Natural Gas - Methods For Chemical Analysis And Testing - Analysis method of general composition (gas chromatography)" or JIS K 0225 "Testing Methods For Determination of Trace Components in Diluent Gas and Zero Gas".

According to the desulfurization system for a fuel cell of the aspect of the invention, it is possible to stably supply a hydrocarbon fuel including oxygen and only a small amount of sulfur compounds.

Since the desulfurization unit in the desulfurization system for a fuel cell according to the aspect of the invention includes the above specific desulfurization catalyst, the degradation of desulfurization performance can be sufficiently suppressed even when the hydrocarbon fuel includes oxygen.

In the desulfurization system for a fuel cell according to the aspect of the invention, the desulfurization catalyst can include an Ag-loaded X-type zeolite and/or a Cu-loaded Y-type zeolite from the viewpoint of desulfurization performance improvement or cost reduction.

In the desulfurization system for a fuel cell according to the aspect of the invention, the hydrocarbon fuel can contain a hydrocarbon compound having 4 or less carbon atoms from the viewpoint of easy procurement of the fuel and the like.

In the desulfurization system for a fuel cell according to the aspect of the invention, the hydrocarbon fuel can contain biogas from the viewpoint of resource limitation or environmental considerations.

A hydrogen production system for a fuel cell according to an aspect of the invention includes the desulfurization system for a fuel cell according to the aspect of the invention; and a hydrogen generation unit that generates hydrogen from the hydrocarbon fuel which has passed through the desulfurization unit.

According to the hydrogen production system for a fuel cell according to the aspect of the invention, since the production system includes the desulfurization system for a fuel cell according to the aspect of the invention, the flow of the sulfur compounds into the hydrogen generation unit can be suppressed for a long period of time, whereby it becomes possible to sufficiently maintain the production efficiency of hydrogen for a long period of time.

A fuel cell system according to an aspect of the invention includes the hydrogen production system according to the aspect of the invention. According to the fuel cell system of the aspect of the invention, since the system includes the hydrogen production system according to the aspect of the invention, it becomes possible to sufficiently maintain the power generation efficiency for a long period of time.

In a desulfurization method of a hydrocarbon fuel according to an aspect of the invention, a hydrocarbon fuel, which contains sulfur compounds, contains oxygen at a volume concentration of 1 ppm to 4%, and has a Wobbe index of 12 kWh/$m^3$ to 16 kWh/$m^3$, is brought into contact with a desulfurization catalyst including an Ag-loaded zeolite and/or a Cu-loaded zeolite.

According to the desulfurization method of a hydrocarbon fuel of the aspect of the invention, it is possible to sufficiently remove the sulfur compounds in the hydrocarbon fuel, which includes oxygen in the above proportion, for a long period of time.

In the desulfurization method of a hydrocarbon fuel according to the aspect of the invention, the desulfurization catalyst can include an Ag-loaded X-type zeolite and/or a Cu-loaded Y-type zeolite from the viewpoint of desulfurization performance improvement or cost reduction.

In the desulfurization method of a hydrocarbon fuel according to the aspect of the invention, the hydrocarbon fuel may contain a hydrocarbon compound having 4 or less carbon atoms from the viewpoint of easy procurement of the fuel and the like.

In a hydrogen production method according to an aspect of the invention, it is possible to obtain hydrogen by reforming a hydrocarbon fuel which has been desulfurized using the desulfurization method according to the aspect of the invention.

**Advantageous Effects of Invention**

According to the invention, it is possible to provide a desulfurization system for a fuel cell, which can supply a hydrocarbon fuel including oxygen and only a small amount of sulfur compounds, a hydrogen production system for a fuel cell, a fuel cell system, a desulfurization method for a hydrocarbon fuel, and a method for producing hydrogen.

**Brief Description of Drawings**

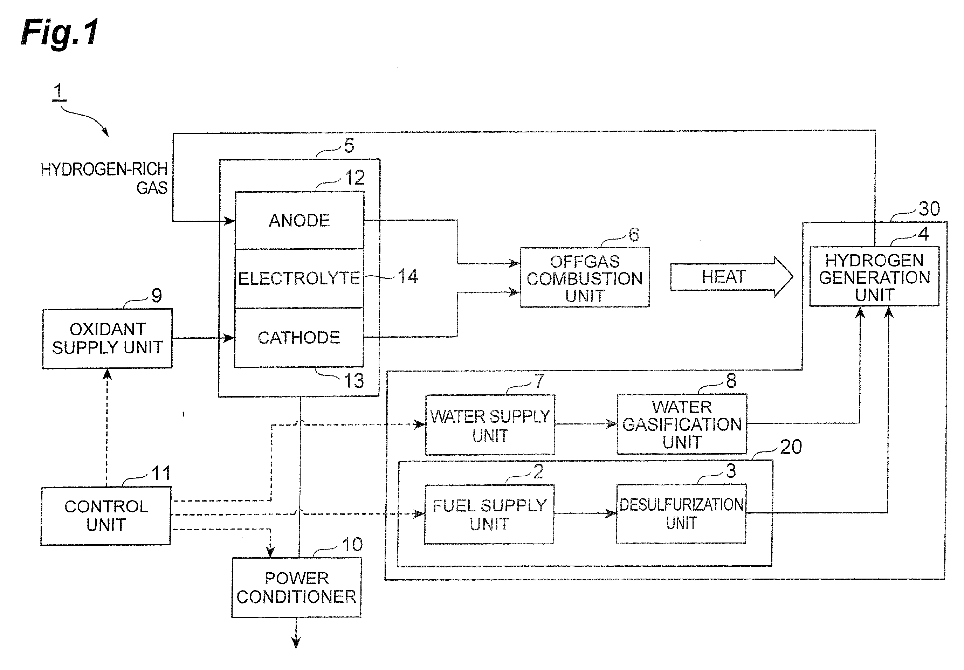

Fig. 1 is a conceptual view illustrating an example of a fuel cell system according to an embodiment of the invention.

**Description of Embodiments**

Hereinafter, preferable embodiments of the invention will be described in detail with reference to the accompanying drawings. Meanwhile, in the respective drawings, similar or corresponding portions will be given a similar reference numeral, and duplicate description will not be made.

Fig. 1 is a conceptual view illustrating an example of a fuel cell system according to an embodiment of the invention. A fuel cell system 1 includes a fuel supply unit 2, a desulfurization unit 3, a hydrogen generation unit 4, a cell stack 5, an offgas combustion unit 6, a water supply unit 7, a water gasification unit 8, an oxidant supply unit 9, a power conditioner 10 and a control unit 11, and the respective units are connected to each other using pipes in the flow illustrated in Fig. 1.

The fuel supply unit 2 constitutes a desulfurization system 20 together with the desulfurization unit 3, and supplies a hydrocarbon-containing fuel to the desulfurization unit 3. The hydrocarbon fuel being supplied includes oxygen at a volume concentration of 1 ppm to 4% and sulfur compounds. Here, as the hydrocarbon fuel, a compound having carbon and hydrogen in the molecule (other elements, such as oxygen, may be included) or mixtures thereof is used. Examples of the hydrocarbon fuel include hydrocarbons, alcohols, ethers and biofuels, and a hydrocarbon fuel of the related art, such as a hydrocarbon fuel derived from a fossil fuel, such as petroleum or coal, a hydrocarbon fuel derived from a synthetic fuel, such as synthetic gas, or a hydrocarbon fuel derived from biomass can be appropriately used as the hydrocarbon fuel. Specific examples of the hydrocarbons include methane, ethane, propane, butane, natural gas, liquefied petroleum gas (LPG), city gas, town gas, gasoline, naphtha, kerosene and gas oil. Examples of the alcohols include methanol and ethanol. Examples of the ethers include dimethyl ether. Examples of the biofuels include biogas, bioethanol, biodiesel and biojet. In the present embodiment, it is possible to preferably use gas mainly including methane, which is supplied using pipelines, (for example, city gas, town gas, natural gas, biogas and the like) or LPG

Generally, a biogas-containing hydrocarbon fuel includes oxygen. The content of oxygen in the hydrocarbon fuel is dependent on the degree of using biogas and the like, and is ordinarily 1 volume ppm to 4 volume%.

In the embodiment, the hydrocarbon fuel preferably includes a hydrocarbon compound having 4 or less carbon atoms. Specific examples of the hydrocarbon compound having 4 or less carbon atoms include saturated aliphatic hydrocarbons, such as methane, ethane, propane and butane, and unsaturated aliphatic hydrocarbons, such as ethylene, propylene and butene. The hydrocarbon fuel is preferably a gas including a hydrocarbon compound having 4 or less carbon atoms, that is, a gas including one or more of methane, ethane, ethylene, propane, propylene, butane and butene. In addition, the gas including a hydrocarbon compound having 4 or less carbon atoms is preferably a gas including 80 volume% or more of methane, and more preferably a gas including 85 volume% or more of methane.

Generally, the hydrocarbon fuel includes sulfur compounds. Examples of the sulfur compounds include a sulfur compound, which is an original combined component of a hydrocarbon, and a compound included in an odorant for gas leakage detection. Examples of the sulfur compound originally combined with a hydrocarbon include hydrogen sulfide ($H_2S$), carbonyl sulfide (COS), carbon disulfide ($CS_2$) and the like. Alkyl sulfides, mercaptans or a mixture thereof is used as the odorant, and examples of the odorant used include diethyl sulfide (DES), dimethyl sulfide (DMS), ethyl methyl sulfide (EMS), tetrahydrothiophene (THT), tert-butyl mercaptan (TBM), isopropyl mercaptan, dimethyl disulfide (DMDS), diethyl disulfide (DEDS) and the like. The sulfur compound is included at approximately 0.1 mass ppm to 10 mass ppm in terms of the sulfur atom-equivalent concentration which is based on the total amount of the hydrocarbon fuel.

The Wobbe index of the hydrocarbon fuel is 12 kWh/m$^3$ to 16 kWh/m$^3$. When the Wobbe index is within the above range, a high-calorie gas can be obtained even when the hydrocarbon fuel contains oxygen and the like, and the fuel becomes excellent in terms of combustion. Here, the Wobbe index is known as an index relating to the combustibility for a gas device, and is defmed by the following formula.

$$\text{Wobbe index (WI)} = H/(S)^{1/2}$$

H: Total amount of heat generation by the hydrocarbon fuel (kWh/m$^3$)
S: Specific gravity of the hydrocarbon fuel with respect to air

The hydrocarbon fuel may include components other than oxygen and the sulfur compounds as long as the characteristics of the fuel cell system are not adversely influenced.

The hydrocarbon fuel supplied from the fuel supply unit 2 is desulfurized at the desulfurization unit 3. The sulfur compounds included in the hydrocarbon fuel poison a reforming catalyst in the hydrogen generation unit 4 or an electrode catalyst in the cell stack 5, and are thus removed using a desulfurization catalyst in the desulfurization unit 3. As the desulfurization catalyst, a desulfurization catalyst including a copper (Cu)-loaded zeolite or a desulfurization catalyst including a silver (Ag)-loaded zeolite is used.

A variety of zeolites, such as an A-type zeolite and a faujasite-type zeolite, can be used as the zeolite; however, in the case of the desulfurization catalyst including copper, a Y-type zeolite is preferably used, and, in a case in which the desulfurization catalyst contains silver, an X-type zeolite is preferably used. A desulfurization catalyst obtained by loading copper in a Y-type zeolite and a desulfurization catalyst obtained by loading silver in an X-type zeolite have a characteristic of a high desulfurization performance even with respect to the oxygen-containing hydrocarbon fuel.

The range of the loaded amount of copper is preferably 3 mass% to 20 mass%, and more preferably 5 mass% to 15 mass% in terms of the total amount of the desulfurization catalyst. In a case in which the loaded amount is smaller than 3 mass%, the desulfurization performance is not sufficient, and, in a case in which the loaded amount is larger than 20 mass%, desulfurization performance commensurate with the addition amount of copper is not exhibited, which is not preferable. The range of the loaded amount of silver is preferably 10 mass% to 30 mass%, and more preferably 15 mass% to 25 mass% in terms of the total amount of the desulfurization catalyst. In a case in which the loaded amount is smaller than 10 mass%, the desulfurization performance is not sufficient, and, in a case in which the loaded amount is larger than 30 mass%, desulfurization performance commensurate with the addition amount of silver is not exhibited, which is not preferable.

As a method for loading copper or silver, an ion exchange method is preferably used. A variety of forms of zeolites, such as a sodium-type zeolite, an ammonium-type zeolite and a proton-type zeolite, can be used as the zeolite used in the ion-exchange, but a sodium-type zeolite is most preferably used. Meanwhile, ordinarily, copper or silver is prepared in a form of being dissolved in water as a cation. Specific examples of copper prepared in a form of being dissolved in water as a cation include aqueous solutions of copper sulfate, copper nitrate, copper chloride, copper acetate and the like; aqueous solutions of copper complex ions, such as copper ammine complex ions; and the like. The concentration of the aqueous solution including copper ions is ordinarily 0.1 mass% to 10 mass%, and preferably 0.5 mass% to 5 mass%, as a concentration of copper. Specific examples of silver prepared in a form of being dissolved in water as a cation include aqueous solutions of silver nitrate, silver perchlorate and the like; aqueous solutions of ammine complex ions of silver; and the like, and an aqueous solution of silver nitrate is most preferably used. The concentration of the aqueous solution including silver ions is ordinarily 0.5 mass% to 10 mass%, and preferably 1 mass% to 5 mass%, as a concentration of silver.

The method for ion exchange is not particularly limited; however, ordinarily, the zeolite is added to a solution including the above cationic copper or silver, and an ion exchange treatment is carried out in a temperature range of ordinarily 0°C to 90°C and preferably 20°C to 70°C for approximately 1 hour to several hours, preferably, under stirring. Subsequently, solid materials are separated using means, such as filtration, washed using water or the like, and then dried at a temperature of 50°C to 200°C, and preferably 80°C to 150°C. The ion exchange treatment can be repeatedly carried out. Next, a calcining treatment may be carried out at 200°C to 600°C and preferably 300°C to 500°C for approximately several hours as necessary. The above method enables the obtainment of the target copper ion-exchanged zeolite or silver ion-exchanged zeolite.

The copper or silver-loaded zeolite produced using the above method can be molded using an ordinary method, in which extrusion, tablet compression, tumbling granulation, spray drying and calcining as necessary are carried out using alumina, silica, a clay mineral or the like or a precursor thereof, such as boehmite, as an appropriate binder, and used. In addition, a method, in which the zeolite is molded in advance and then the ion exchange method is applied, is also preferably employed.

In the embodiment, regarding the copper ion-exchanged zeolite and the silver ion-exchanged zeolite produced in the above manner as the desulfurization catalysts, it is more preferable to assign the copper ion-exchanged zeolite to a former stage portion, assign the silver ion-exchanged zeolite to a latter stage portion, and carry out desulfurization. When the copper ion-exchanged zeolite is assigned to the former stage portion, and the silver ion-exchanged zeolite is assigned to the latter stage portion, the desulfurization performance can be further enhanced. In addition, desulfurization may be carried out with the silver ion-exchanged zeolite assigned to the former stage portion and the copper ion-exchanged zeolite assigned to the latter stage portion.

Regarding the desulfurization conditions, ordinarily, the hydrocarbon fuel is preferably in a gasified state. The desulfurization temperature is preferably 100°C or lower, and selected from, for example, a range of -50°C to 100°C, more preferably a range of -20°C to 80°C, still more preferably a range of 0°C to 60°C, and most preferably a range of 10°C to 50°C. In a case in which a fuel, which is a gas at room temperature (for example, 25°C) and at normal pressure (for example, 0 MPa in terms of gauge pressure), such as city gas, is used, the gas hourly space velocity (GHSV) is selected from 10 $h^{-1}$ to 20000 $h^{-1}$, and preferably selected from 10 $h^{-1}$ to 7000 $h^{-1}$. When GHSV is lower than 10 $h^{-1}$, the desulfurization performance becomes sufficient, but the desulfurization catalyst is used more than necessary, and therefore the desulfurization device becomes oversized, which is not preferable. On the other hand, when GHSV is larger than 20000 $h^{-1}$, a sufficient desulfurization performance cannot be obtained. Meanwhile, a liquid fuel can also be used as the fuel, and, in this case, the liquid hourly space velocity (LHSV) can be selected from a range of 0.01 $h^{-1}$ to 100 $h^{-1}$. The pressure condition is selected from a range of ordinarily normal pressure to 1 MPa (gauge pressure, this shall apply below), preferably normal pressure to 0.5 MPa, and still more preferably normal pressure to 0.2 MPa, and is most preferably the atmospheric pressure condition.

The hydrocarbon fuel, from which the sulfur compounds have been removed at the desulfurization unit 3, is supplied to the hydrogen generation unit 4. The hydrogen generation unit 4 constitutes a hydrogen production system 30 together with the desulfurization system 20. The hydrogen generation unit 4 has a reforming device that reforms the desulfurized hydrocarbon fuel using a reforming catalyst, and generates hydrogen-rich gas. The reforming method at the hydrogen generation unit 4 is not particularly limited, and steam reforming, partial oxidation reforming, autothermal reforming, and other reforming methods can be employed. In addition, the reforming temperature is ordinarily 200°C to 800°C, and preferably 300°C to 700°C. Meanwhile, there are cases in which the hydrogen generation unit 4 has a configuration for adjusting other properties of the reforming device that carries out reforming using the reforming catalyst depending on the properties of the hydrogen-rich gas, which are demanded by the cell stack 5. For example, in a case in which the type of the cell stack 5 is a polymer electrolyte fuel cell (PEFC) or a phosphoric acid fuel cell (PAFC), the hydrogen generation unit 4 has a configuration (for example, a shift reaction unit and a preferential oxidation reaction unit) for removing carbon monoxide in the hydrogen-rich gas. The hydrogen generation unit 4 supplies the hydrogen-rich gas to an anode 12 in the cell stack 5.

The reforming catalyst is not particularly limited, and a general reforming catalyst can be used. Examples thereof include reforming catalysts obtained by loading a metal selected from metals belonging to Group VIII in the periodic table, such as nickel, cobalt, iron, ruthenium, rhodium, iridium and platinum, in a porous inorganic oxide selected from alumina, silica and the like.

In addition, in the hydrogen generation unit 4, steam is preferably supplied from the water gasification unit 8 in order to reform the hydrocarbon fuel. The steam is preferably generated by heating and gasifying water supplied from the water supply unit 7 at the water gasification unit 8. For the heating of water at the water gasification unit 8, for example, heat generated in the fuel cell system 1, such as heat at the hydrogen generation unit 4, heat at the offgas combustion unit 6 or recovered heat of exhaust gas, may be used. In addition, the water may be heated using other heat sources, such as a heater or a burner. Meanwhile, Fig. 1 only illustrates heat supplied from the offgas combustion unit 6 to the steam generation unit 4 as an example, but the heat is not limited thereto.

The hydrogen-rich gas is supplied to the fuel cell system 1 from the hydrogen production system 30 through a pipe (not illustrated) that connects the hydrogen production system 30 and the cell stack 5. Power is generated at the cell stack 5 using the hydrogen-rich gas and an oxidant. The type of the cell stack 5 in the fuel cell system 1 is not particularly limited, and, for example, a polymer electrolyte fuel cell (PEFC), a solid oxide fuel cell (SOFC), a phosphoric acid fuel cell (PAFC), a molten carbonate fuel cell (MCFC) and other types of cell stacks can be employed. Meanwhile, the configuration elements illustrated in Fig. 1 may be appropriately omitted depending on the type, reforming method and the like of the cell stack 5.

The oxidant is supplied from the oxidant supply unit 9 through a pipe that connects the oxidant supply unit 9 and the fuel cell system 1. Examples of the oxidant that can be used include air, pure oxygen gas (which may include impurities that cannot be easily removed using an ordinary removing method), and oxygen-enriched air.

The cell stack 5 generates power using the hydrogen-rich gas from the hydrogen generation unit 4 and the oxidant from the oxidant supply unit 9. The cell stack 5 includes the anode 12, from which the hydrogen-rich gas is supplied, a cathode 13, from which the oxidant is supplied, and an electrolyte 14 disposed between the anode 12 and the cathode 13. The cell stack 5 supplies power to the outside through the power conditioner 10. The cell stack 5 supplies the hydrogen-rich gas and the oxidant, which are not used for power generation, to the offgas combustion unit 6 as offgas. Meanwhile, a combustion unit (for example, a combustor that heats the reforming device) included in the hydrogen generation unit 4 may be jointly used with the offgas combustion unit 6.

The offgas combustion unit 6 combusts the offgas supplied from the cell stack 5. Heat generated by the offgas combustion unit 6 is supplied to the hydrogen production unit 4, and used to generate the hydrogen-rich gas at the hydrogen generation unit 4. In addition, the fuel supply unit 2, the water supply unit 7 and the oxidant supply unit 9 are constituted using, for example, pumps, and are driven based on control signals from the control unit 11.

The power conditioner 10 adjusts the power from the cell stack 5 in accordance with the power consumption state at the outside. The power conditioner 10 carries out, for example, a treatment for converting a voltage or a treatment for converting direct-current power into alternating-current power.

The control unit 11 carries out the control treatment of the entire fuel cell system 1. The control unit 11 is configured of a device configured by including, for example, a central processing unit (CPU), a read only memory (ROM), a random access memory (RAM) and an input and output interface. The control unit 11 is electrically connected to the fuel supply unit 2, the water supply unit 7, the oxidant supply unit 9, the power conditioner 10, and other sensors or auxiliary machines which are not illustrated. The control unit 11 obtains a variety of signals generated in the fuel cell system 1, and outputs control signals to the respective devices in the fuel cell system 1.

Thus far, according to the desulfurization system, hydrogen production system and fuel cell system of the embodiment, it is possible to stably supply a sufficiently desulfurized hydrocarbon fuel including oxygen.

Next, the desulfurization method for a hydrocarbon fuel and the method for producing hydrogen of the embodiment will be described. In the desulfurization method for a hydrocarbon fuel of the embodiment, a hydrocarbon fuel, which contains the sulfur compounds, contains oxygen at a volume concentration of 1 ppm to 4%, and has a Wobbe index of 12 kWh/m$^3$ to 16 kWh/m$^3$, is brought into contact with a desulfurization catalyst including an Ag-loaded zeolite and/or a Cu-loaded zeolite.

Examples of the hydrocarbon fuel, which contains the sulfur compounds, contains oxygen at a volume concentration of 1 ppm to 4%, and has a Wobbe index of 12 kWh/m$^3$ to 16 kWh/m$^3$ include the hydrocarbon fuels described above.

Specific means for bringing the hydrocarbon fuel into contact with the desulfurization catalyst including an Ag-loaded zeolite and/or a Cu-loaded zeolite is the above fuel supply unit 2 and the above desulfurization unit 3. That is, the hydrocarbon fuel is supplied to the desulfurization unit 3 using the fuel supply unit 2, and the supplied hydrocarbon fuel is brought into contact with the desulfurization catalyst at the desulfurization unit 3.

Regarding the desulfurization conditions, ordinarily, the hydrocarbon fuel is preferably in a gasified state. The desulfurization temperature is preferably 100°C or lower, and selected from, for example, a range of -50°C to 100°C, more preferably a range of -20°C to 80°C, still more preferably a range of 0°C to 60°C, and most preferably a range of 10°C to 50°C. In a case in which a fuel, which is a gas at room temperature (for example, 25°C) and at normal pressure (for example, 0 MPa in terms of gauge pressure), such as city gas, is used, GHSV is selected from 10 h$^{-1}$ to 20000 h$^{-1}$, and preferably selected from 10 h$^{-1}$ to 7000 h$^{-1}$. When GHSV is lower than 10 h$^{-1}$, the desulfurization performance becomes sufficient, but the desulfurization catalyst is used more than necessary, and therefore the desulfurization device becomes oversized, which is not preferable. On the other hand, when GHSV is larger than 20000 h$^{-1}$, a sufficient desulfurization performance cannot be obtained. Meanwhile, a liquid fuel can also be used as the fuel, and, in this case, LHSV can be selected from a range of 0.01 h$^{-1}$ to 100 h$^{-1}$. The pressure condition is selected from a range of ordinarily normal pressure to 1 MPa (gauge pressure, this shall apply below), preferably normal pressure to 0.5 MPa, and still more preferably normal pressure to 0.2 MPa, and is most preferably the atmospheric pressure condition.

In the method for producing hydrogen of the embodiment, the hydrocarbon fuel desulfurized using the above desulfurization method is reformed, and hydrogen (hydrogen-rich gas) is generated. The reforming method is not particularly limited as described above, and, for example, steam reforming, partial oxidation reforming, autothermal reforming, and other reforming methods can be employed. The reforming temperature is ordinarily 200°C to 800°C, and preferably 300°C to 700°C.

As described above, a general reforming catalyst can be used as the reforming catalyst. Examples thereof include reforming catalysts obtained by loading a metal selected from metals belonging to Group VIII in the periodic table, such as nickel, cobalt, iron, ruthenium, rhodium, iridium and platinum, in a porous inorganic oxide selected from alumina, silica and the like. Among the above, a reforming catalyst obtained by loading Ru or Rh, more preferably Rh as an active metal in a carrier, which includes one or two or more elements selected from cerium oxides, rare earth element oxides mainly including a cerium oxide and aluminum oxides as a catalyst carrier, is preferably used.

In addition, regarding the reforming, since steam is required in order to reform the fuel, steam is preferably supplied to the hydrogen generation unit 4 from the water gasification unit 8. The steam is preferably generated by heating and gasifying water supplied from the water supply unit 7 at the water gasification unit 8.

[Examples]

Hereinafter, the invention will be specifically described using examples, but the invention is not limited to the examples. In the present example, the desulfurization performance of a desulfurization catalyst with respect to the oxygen-containing hydrocarbon fuel was evaluated using a gas mixture of oxygen containing dimethyl sulfide and methane.

<Preparation of desulfurization catalyst (A)>

Distilled water (600 ml) was added to silver nitrate (30 g) so as to prepare an aqueous solution of silver nitrate. Next, commercially available NaX-type zeolite powder (50 g) having $SiO_2/Al_2O_3$ (molar ratio) of 2.5 was mixed under stirring, and ion exchange was carried out. After that, the mixture was washed using distilled water so as to completely remove nitrate radicals. After washing, the mixture was dried in the air at 180°C for one night. An alumina binder (5 g) was mixed with the dried powder-form silver-exchanged zeolite (30 g), and the mixture was extruded at 1 mmφ, thereby producing a desulfurization catalyst (A). The loaded amount of silver in the desulfurization catalyst (A) was 24 mass% in terms of the total amount of the desulfurization catalyst (A).

<Preparation of desulfurization catalyst (B)>

Distilled water (600 ml) was added to copper sulfate pentahydrate 5 (32 g) so as to prepare an aqueous solution of copper sulfate. Next, commercially available NaY-type zeolite powder (50 g) having $SiO_2/Al_2O_3$ (molar ratio) of 5.5 was mixed under stirring, and ion exchange was carried out. After that, the mixture was washed using distilled water so as to completely remove sulfate radicals. After washing, the mixture was dried in an air current at 180°C for one night. An alumina binder (5 g) was mixed with the dried powder-form copper-exchanged zeolite (30 g), and the mixture was extruded at 1 mmφ, thereby producing a desulfurization catalyst (B). The loaded amount of copper in the desulfurization catalyst (B) was 12 mass% in terms of the total amount of the desulfurization catalyst (B).

<Preparation of desulfurization catalyst (C)>

Nickel nitrate hexahydrate (commercially available special grade chemical, 272.5 g) and zinc nitrate hexahydrate (commercially available special grade chemical, 54.8 g) were dissolved in ion-exchanged water, and 2500 ml of the aqueous solution was used as a C liquid. Sodium carbonate (commercially available special grade chemical, 130.8 g) was dissolved in ion-exchanged water, commercially available silica sol (particle diameter of approximately 15 nm, 50 g) (content of silica 15.0 g) was mixed in, and 1000 ml of the aqueous solution was used as a D liquid. The C liquid and the D liquid were mixed at 40°C under stirring, and sediment was formed. After the sediment was washed using ion-exchanged water, the obtained cake was pulverized, dried at 120°C for 10 hours, and then calcined at 360°C for 4 hours, thereby obtaining 100 g of calcined powder. The composition of the calcined powder was $NiO/ZnO/SiO_2$=70 mass%/15 mass%/15 mass% with 0.05 mass% or less of remaining Na. The obtained calcined powder was extruded and used as a desulfurization catalyst (BET specific surface area 260 $m^2$/g) with the diameter set to 1.0 mmφ.

<Performance testing of the desulfurization catalysts>

(Example 1)

The desulfurization catalyst (A) (6 ml) was loaded into a fixed-bed reaction tube, dimethyl sulfide (DMS) was included at 80 mass ppm in terms of sulfur atoms, and a methane gas having an oxygen concentration of 0.5 volume% was circulated at GHSV of 500 $h^{-1}$, normal pressure and 30°C. The concentration of sulfur at the exit of the reaction tube was measured using sulfur chemiluminescence detector (SCD) gas chromatography. After the beginning of the testing, the circulation of the gas was stopped when the sulfur atom-equivalent concentration of the sulfur compound in the exit gas in terms of the total amount of the hydrocarbon fuel became 0.05 volume ppm or more, and the performance was evaluated using the amount of sulfur trapped at the desulfurization catalyst between when the testing began and ended. Meanwhile, in the present performance testing, the fuel contains the dimethyl disulfide at a higher concentration than usual in terms of the evaluation of durability performance. In addition, the oxygen concentration is a value measured according to JIS K 2301 "Fuel Gases And Natural Gas - Methods For Chemical Analysis And Testing - Analysis method of general composition (gas chromatography)".

(Example 2)

The performance was evaluated in the same manner as in Example 1 except that the oxygen concentration was set to 4 volume%.

(Reference Example 1)

The performance was evaluated in the same manner as in Example 1 except that the oxygen concentration was set to 0 volume%.

(Example 3)

The performance was evaluated in the same manner as in Example 1 except that the desulfurization catalyst (B) (6 ml) was used, and the oxygen concentration was set to 4 volume%.

(Reference Example 2)

The performance was evaluated in the same manner as in Example 3 except that the oxygen concentration was set to 0 volume%.

(Example 4)

The performance was evaluated in the same manner as in Example 1 except that the desulfurization catalyst (B) (3 ml) was loaded at the former stage portion of the reaction tube, the desulfurization catalyst (A) (3 ml) was loaded at the latter stage portion of the reaction tube, and the oxygen concentration was set to 4 volume%.

(Reference Example 3)

The performance was evaluated in the same manner as in Example 4 except that the oxygen concentration was set to 0 volume%.

(Comparative Example 1)

The performance was evaluated in the same manner as in Example 1 except that the desulfurization catalyst

(C) (6 ml) was used, and the gas was circulated at 200°C.

(Reference Example 4)

**[0069]** The performance was evaluated in the same manner as in Comparative Example 1 except that the oxygen concentration was set to 0 volume%.

**[0070]** The results for Examples 1 to 4, Reference Examples 1 to 4 and Comparative Example 1 will be described in Table 1.

**[0071]**

[Table 1]

| | Catalyst | DMS, mass ppm | $O_2$ concentration, volume% | Desulfurization temperature, °C | Desulfurization performance | Wobbe index $kWh/m^3$ |
|---|---|---|---|---|---|---|
| Reference Example 1 | A(Ag/X) | 80 | 0 | 30 | 1 | 13.5 |
| Example 1 | A(Ag/X) | 80 | 0.5 | 30 | 1.0 * 1 | 13.3 |
| Example 2 | A(Ag/X) | 80 | 4 | 30 | 1.0 *1 | 12.1 |
| Reference Example 2 | B(Cu/Y) | 80 | 0 | 30 | 1 | 13.5 |
| Example 3 | B(Cu/Y) | 80 | 4 | 30 | 1.0 *2 | 12.1 |
| Reference Example 3 | A+B (Cu/Y+Ag/X) | 80 | 0 | 30 | 1 | 13.5 |
| Example 4 | A+B (Cu/Y+Ag/X) | 80 | 4 | 30 | 1.0 *3 | 12.1 |
| Reference Example 4 | C (Ni-based desulfurizing agent) | 80 | 0 | 200 | 1 | 13.5 |
| Comparative Example 1 | C (Ni-based desulfurizing agent) | 80 | 0.5 | 200 | 0.2 *4 | 13.3 |

* 1: Relative comparison when the performance of Reference Example 1 was set to 1
*2: Relative comparison when the performance of Reference Example 2 was set to 1
*3: Relative comparison when the performance of Reference Example 3 was set to 1
*4: Relative comparison when the performance of Reference Example 4 was set to 1

**[0072]** As described in Table 1, in Examples 1 and 2, in which the desulfurization catalyst (A) was used, Example 3, in which the desulfurization catalyst (B) was used, and Example 4, in which the desulfurization catalyst (A) and the desulfurization catalyst (B) were used, the hydrocarbon fuels included oxygen, and the desulfurization performances were equivalent to the desulfurization performances of Reference Examples 1 to 3, in which the oxygen-free hydrocarbon fuel was used. Meanwhile, in Comparative Example 1, in which the desulfurization catalyst (C) was used, a significant decrease in the desulfurization performance with respect to a hydrocarbon fuel including 0.5 volume% of oxygen appeared compared with Reference Example 4.

**Industrial** Applicability

**[0073]** According to the invention, it is possible to provide a desulfurization system for a fuel cell, which can supply a hydrocarbon fuel including oxygen and only a small amount of sulfur compounds, a hydrogen production system for a fuel cell, a fuel cell system, a desulfurization method for a hydrocarbon fuel, and a method for producing hydrogen.

**Reference Signs List**

1···FUEL CELL SYSTEM, 2···FUEL SUPPLY UNIT, 3···DESULFURIZATION UNIT, 4···HYDROGEN PRODUCTION UNIT, 5···CELL STACK, 20···DESULFURIZATION SYSTEM, 30···HYDROGEN PRODUCTION SYSTEM

**Claims**

1.   A desulfurization system for a fuel cell comprising:

a fuel supply unit that supplies a hydrocarbon fuel, which contains sulfur compounds, contains oxygen at a
volume concentration of 1 ppm to 4%, and has a Wobbe index of 12 kWh/m$^3$ to 16 kWh/m$^3$, at a latter stage
portion; and
a desulfurization unit that includes a desulfurization catalyst that desulfurizes the hydrocarbon fuel,
wherein the desulfurization catalyst includes an Ag-loaded zeolite and/or a Cu-loaded zeolite.

2.   The desulfurization system for a fuel cell according to Claim 1,
wherein the desulfurization catalyst includes an Ag-loaded X-type zeolite and/or a Cu-loaded Y-type zeolite.

3.   The desulfurization system for a fuel cell according to Claim 1 or 2,
wherein the hydrocarbon fuel contains a hydrocarbon compound having 4 or less carbon atoms.

4.   The desulfurization system for a fuel cell according to any one of Claims 1 to 3,
wherein the hydrocarbon fuel contains biogas.

5.   A hydrogen production system for a fuel cell comprising:

the desulfurization system for a fuel cell according to any one of Claims 1 to 4; and
a hydrogen generation unit that generates hydrogen from the hydrocarbon fuel which has passed through the
desulfurization unit.

6.   A fuel cell system comprising the hydrogen production system according to Claim 5.

7.   A desulfurization method of a hydrocarbon fuel,
wherein a hydrocarbon fuel, which contains sulfur compounds, contains oxygen at a volume concentration of 1 ppm
to 4%, and has a Wobbe index of 12 kWh/m$^3$ to 16 kWh/m$^3$, is brought into contact with a desulfurization catalyst
including an Ag-loaded zeolite and/or a Cu-loaded zeolite.

8.   The desulfurization method of a hydrocarbon fuel according to Claim 7,
wherein the desulfurization catalyst includes an Ag-loaded X-type zeolite and/or a Cu-loaded Y-type zeolite.

9.   The desulfurization method of a hydrocarbon fuel according to Claim 7 or 8,
wherein the hydrocarbon fuel contains a hydrocarbon compound having 4 or less carbon atoms.

10.  A hydrogen production method,
wherein hydrogen is obtained by reforming a hydrocarbon fuel which has been desulfurized using the desulfurization
method according to any one of Claims 7 to 9.

Fig.1

| | INTERNATIONAL SEARCH REPORT | International application No. |
|---|---|---|
| | | PCT/JP2011/079702 |

A.  CLASSIFICATION OF SUBJECT MATTER
*H01M8/06*(2006.01)i, *B01D53/14*(2006.01)i, *B01J20/02*(2006.01)i, *B01J20/18*(2006.01)i, *C01B3/38*(2006.01)i, *C10G25/05*(2006.01)i, *C10L3/10*(2006.01)i

According to International Patent Classification (IPC) or to both national classification and IPC

B.  FIELDS SEARCHED

Minimum documentation searched (classification system followed by classification symbols)
H01M8/06, B01D53/14, B01J20/02, B01J20/18, C01B3/38, C10G25/05, C10L3/10

Documentation searched other than minimum documentation to the extent that such documents are included in the fields searched
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2002-60204 A  (Fuji Electric Co., Ltd.), 26 February 2002 (26.02.2002), entire text (Family: none) | 1-10 |
| Y | JP 2009-530435 A  (Johnson Matthey PLC.), 27 August 2009 (27.08.2009), entire text & US 2009/242462 A1    & EP 1993719 A & WO 2007/105012 A1 | 1-10 |
| Y | JP 2003-20489 A  (Tokyo Gas Co., Ltd.), 24 January 2003 (24.01.2003), entire text (Family: none) | 1-10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 March, 2012 (23.03.12) | 03 April, 2012 (03.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/079702

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-146052 A (Nippon Oil Corp.), 14 June 2007 (14.06.2007), entire text (Family: none) | 1-10 |
| Y | JP 2003-277779 A (Mitsubishi Heavy Industries, Ltd.), 02 October 2003 (02.10.2003), entire text (Family: none) | 1-10 |
| Y | JP 2009-24079 A (Taiyo Nippon Sanso Corp.), 05 February 2009 (05.02.2009), entire text (Family: none) | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10237473 A